# EUROPEAN PATENT APPLICATION

(11) **EP 1 016 951 A1**
(43) Date of publication of application: **05.07.2000**
(21) Application number: 98650085.8
(22) Date of filing: 11.12.1998
(51) Int. Cl.: G06F 1/16

(54) **A portable computer**

(30) Priority: 12.11.1998 IE 980930
(71) Applicant: NTS Computer Systems R & D (Ireland) Limited, Shannon, County Clare (IE)
(72) Inventor: Roche, Frank, Castletroy, Limerick (IE); Tocher, James, c/o NTS Com. Sys. R&D(Ireland Ltd., Shannon, County Clare (IE)
(74) Representative: O'Brien, John Augustine

(57) **Abstract**

A portable computer (1) has a clamshell configuration with a base (2) and a screen (3). The screen (3) fits into a recess in the base (2) when closed. The rear of the base (2) fits into a docking station with the computer (1) in an upright position. A carrying handle (9) allows the computer to be easily inserted in the docking station, and to be carrier around by a student. A power management circuit (88) maintains power supply to a CPU (80) and RAM (93) when the computer (1) is switched off. This allows instant start-up subject to power supply validation.

## Description

### INTRODUCTION

### Field of the Invention

The invention relates to a computer for use in an educational establishment by students.

### Prior Art Discussion

It is now being regarded as a priority to provide computing facilities to students at almost all educational levels and ages. Typically, the approach has been to provide a dedicated laboratory in a school or college in which PCs or mainframe terminals are provided for student use. While this approach does provide powerful computing facilities for students, it is generally an expensive approach and only one group of students at a time may use the facilities. Also, the use of the computing facilities is specific to the student only to the extent of centralised file storage. Some of these problems are addressed by providing a portable computing laboratory, as described in United States Patent Specification No. US4538995 (Fryer). However, many of the fundamental problems remain whereby school timetables must be organised to provide pre-determined times at which the facilities may be used and there is therefore limited flexibility.

Another approach has been to provide a comprehensive system comprising student units, teacher units, and central administration units all of which are interconnected, as described in United States Patent Specification No. US4820167 (Nobles *et al*). While this approach does appear to provide comprehensive computing facilities for students and teachers, it appears to be difficult and expensive to install in a school.

Another approach has been to provide relatively small portable computers for use by students. For example, European patent specification No. EP667566 (Sony) describes a computer comprising a tablet and a separate monitor. While this system appears to be quite suitable for young children, it has limited functionality and would not be suitable for older students.

United States patent specification US5262926 (Hall) describes a portable computer in a clamshell configuration. The computer incorporates a movable reflector to permit a user to view an upside-down mirror image of the display.

### Objects of the Invention

It is an object of the invention to take the principle of providing a portable computer for use by students further to the extent that the computer provides extensive computing facilities, may be easily recharged, and is inexpensive.

Another object is that the computer be rugged and robust to withstand the rough physical handling which arises in schools and also frequent and/or careless switching off.

### SUMMARY OF THE INVENTION

According to the invention, there is provided a portable computer for students, the computer comprising:-
a base housing data processing circuits including a CPU and memory, and a screen hinged to the base in a clamshell configuration; and
a re-chargeable power supply means, characterised in that,
the power supply means comprises terminals mounted to engage charging terminals in a docking station;
the base comprises a carrying handle in a side of the computer; and
the data processing circuits comprise power management means for maintaining power supply to the CPU and to the memory in a standby mode when the computer has been switched off by a user.

By providing a re-chargeable power supply means as described, the computer may be easily re-charged by insertion in a docking station. The carrying handle may be used for this purpose, and also for the purpose of carrying the computer generally. The power management means ensures that data and programs are not corrupted by careless switching of the power in the computer, and this facility also allows the computer to be frequently switched off without the need for time-consuming shut-down and boot-up procedures.

Preferably, a rear portion of the base is configured for standing upright in a docking station and the recharging terminals are mounted in the rear portion. This allows the computer to be re-charged in a compact docking station at which use of space is optimised. For example, the docking station may be mobile and require very little space in a classroom.

In one embodiment, the rear portion supports communication and interfacing ports. This is a simple arrangement to allow comprehensive docking facilities.

Preferably, the power supply means comprises a standby power supply and a full power supply, and the power management means comprises means for selecting between full and standby power outputs. This is a simple and inexpensive arrangement for providing both full and standby power outputs to allow the computer to be switched off without loss of data or programs.

In one embodiment, the power management means comprises:-
means for detecting when a user switches the computer on and off,
means for detecting power supply output level;
means in the CPU for shutting down circuits when a user switches off, and
means for selecting standby mode power when the circuits are shut down; and means for selecting full power if switching on is detected and the power supply output exceeds a pre-set threshold.

This arrangement ensures that the CPU is in control and shuts down circuits in an appropriate manner, while also providing the facility of maintaining data and programs when the computer is switched off.

In one embodiment, the selection means comprises means for generating a display message for a user if the power supply voltage level is in an interim range above the pre-set threshold. Thus, the pre-set threshold may be set at a level above which it is safe to use the full power supply, however, the student is warned as the level drops close to this threshold.

In one embodiment, the power management means comprises a logic circuit connected to the CPU and to the power supply. This is a reliable and inexpensive way of providing a power management means.

In another embodiment, the memory is mounted on a removable circuit. This allows data and programs to be specific to a student if the computer is to be used by different students. It also allows the memory capacity to be easily upgraded.

In one embodiment, the base comprises an opening in a bottom wall for receiving the removable circuit. This is a particularly convenient and safe way of providing access to the main circuits within the base.

In one embodiment, the removable circuit also includes read only memory storing the operating system. This allows the system to be easily upgraded with a fresh operating system and it also allows the operating system to be replaced if a fault arises.

Preferably, the read only memory is Flash ROM. This allows instant start-up by the CPU.

In one embodiment, the handle is integrally moulded in the base of the computer. This provides for reduced production costs and ensures that the handle is particularly effective.

In one embodiment, the base comprises a keyboard and a hand rest extending forwardly and downwardly from the keyboard. This is a particularly ergonomic way of providing a hand rest for a student and avoids the need to provide an accessory hand rest.

In one embodiment, the keyboard and the hand rest are in a recess in the base for receiving the screen when in the closed position. Such a recess provides for a very slim and rugged construction of computer. Because the screen is nested within the recess, it is not easily damaged by knocks to the computer, and the profile of the computer can be quite slim.

In one embodiment, the hand rest incorporates a track pad for cursor movement. This is an easily-accessible location for the track pad, particularly for inexperienced students.

In another embodiment, the data processing circuits comprise a mother circuit board housed within the base underneath the keyboard, and a connection circuit board housed within the base adjacent to the rear portion, the mother board and the connector board being interconnected by system bus connectors. This minimises the number of circuit boards within the computer, thus providing robustness and efficient use of space. It also minimises the number of connectors, thus reducing costs and reducing the number of potential points-of-failure.

In one embodiment, the mother circuit board comprises means for connection directly to the removable circuit. Thus, the mother board and the removable circuit are physically located together, again reducing space requirements, cabling, and the number of potential points-of-failure.

Preferably, the mother circuit board and the connector circuit board are mounted on pillars in a bottom moulding, the pillars providing structural connection between the bottom moulding and a top moulding. This arrangement provides support for the circuits in a manner which prevents circuit movement, and which also provides strength to resist compression of the computer.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a perspective view from above of a portable computer of the invention;
Fig. 2 is a perspective view of a docking station for use by the computer;
Fig. 3 is a set of views showing a cradle of the docking station;
Fig. 4 is a rear elevational view of the computer in the closed position;
Fig. 5 is an underneath plan view of the computer;
Fig. 6 is a side view of a bottom moulding of a base of the computer;
Fig. 7 is a diagrammatic cross-sectional view from the side of the bottom moulding shown in Fig. 6;
Fig 8 is a diagrammatic cross-sectional view from the other side of the bottom moulding, in which circuit boards are indicated by interrupted lines; and
Fig. 9 is a block diagram showing the circuit architecture of the computer.

### Description of the Embodiments

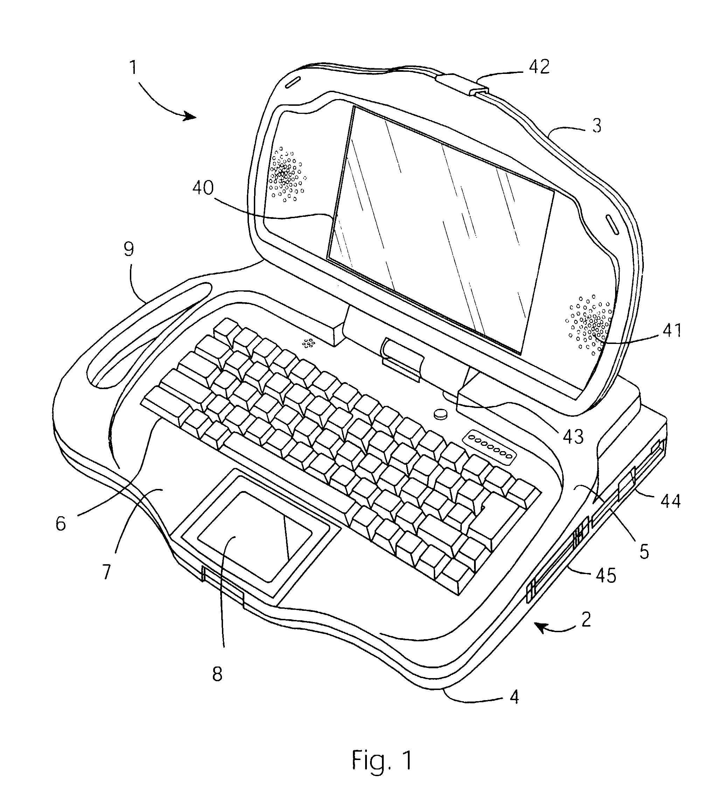

Referring to the drawings and initially to Fig. 1, there is shown a portable computer 1 having a clamshell configuration with a base 2 and a screen 3 pivotally connected to the base 2. The screen 3 is lifted and opened for use of the computer, and for storage it is simply closed over the keyboard to provide a slim, compact, and robust configuration.

The base 2 comprises a bottom moulding 4 and a top moulding 5 which together enclose the processing circuits of the computer and various other parts as described below. The top moulding 5 includes a recess which receives the screen 3.

The computer 1 comprises a keyboard 6 and a hand rest in front of the keyboard 6 which extends forwardly and downwardly to provide an ergonomic configuration in which the keyboard 6 and the hand rest 7 are recessed into the top moulding 5. A track pad 8 is mounted in the hand rest 7.

The base 2 comprises an integrally moulded handle 9 on the left side as viewed from the front. The base 2 has a plug-shaped rear portion which has a generally squared configuration. This rear portion allows the computer to be slotted into a docking station in a stable upright position. The handle 9 allows the computer to be easily carried and to be placed in the docking station in this position.

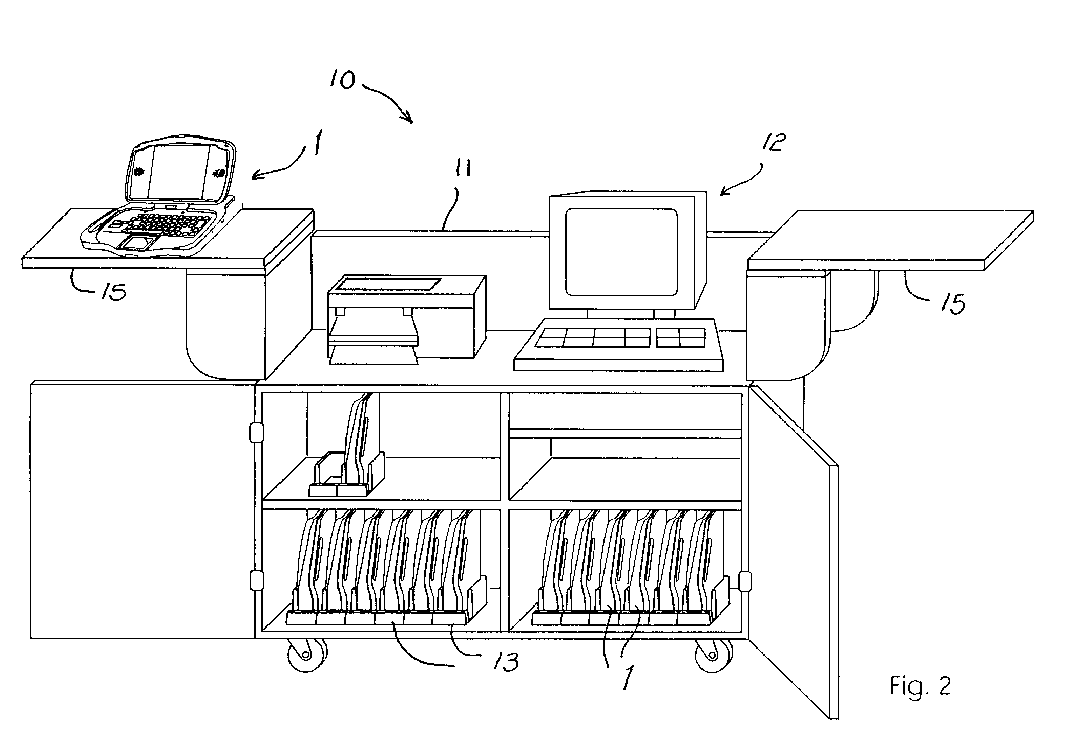

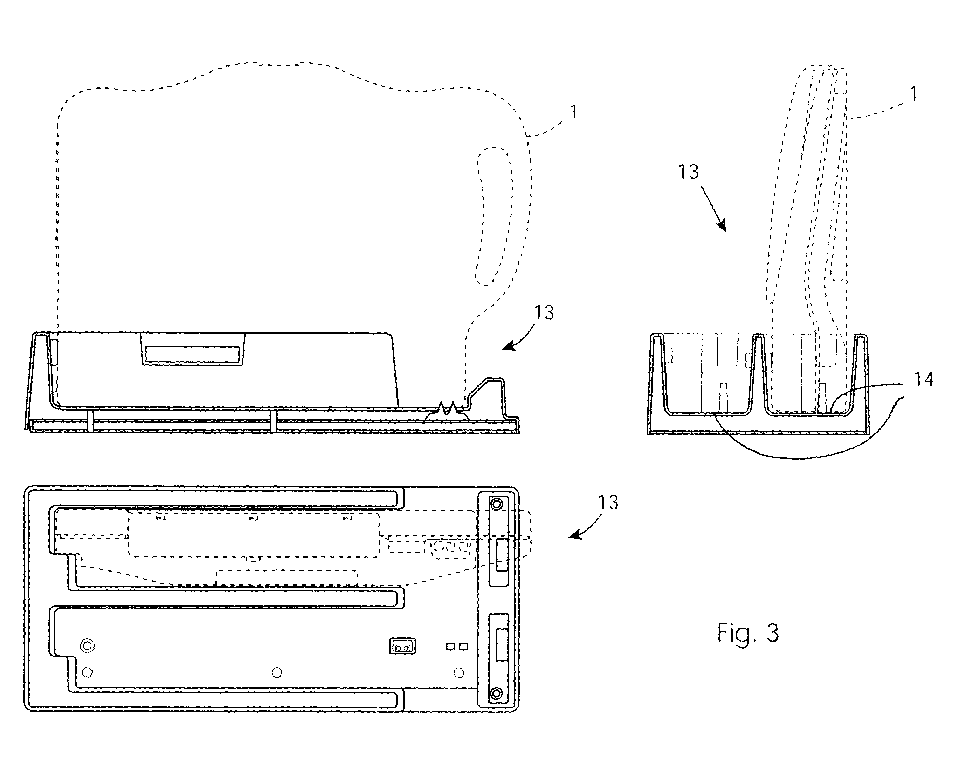

Referring to Fig. 2, a docking station 10 is illustrated. The docking station 10 comprises a mobile frame 11 supporting a controller 12, which controls provision of DC re-charging at the station 10. The computers 1 are placed in an upright position in cradles 13, each having a pair of seats 14, as shown most clearly in Fig. 3. As is clear from Fig. 2, a variable number of cradles 13 may be used for each docking station. Typically, there is one docking station per classroom, and it may be wheeled into the classroom from storage when required. The station 1 also comprises a pair of work tops 15 for using computers 1. It will be appreciated that the docking station 10 is compact and convenient for use in re-charging a number of computers 1. Also, the computers 1 may be easily slotted into the cradles 13 and take up little space in this position.

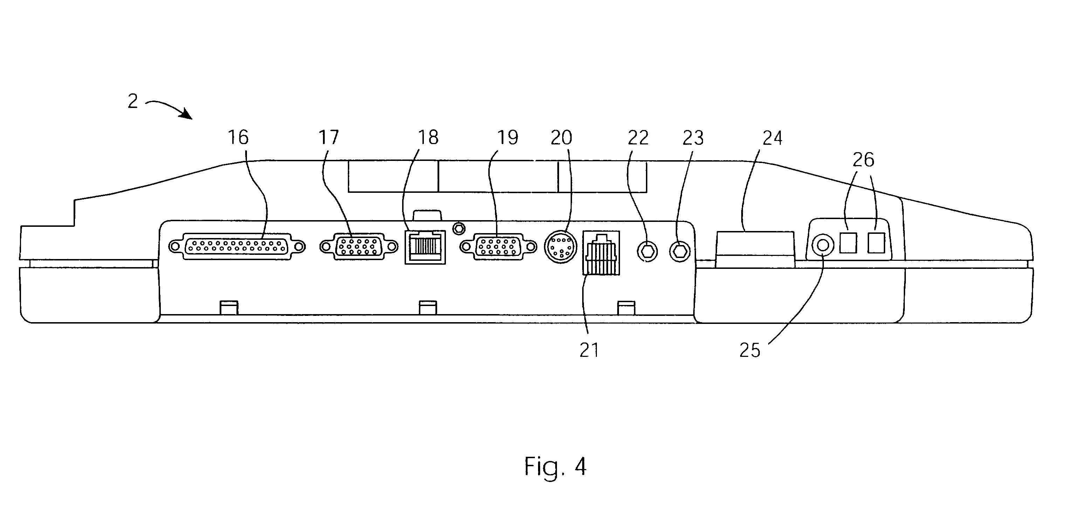

Referring now to Fig. 4, the rear portion of the base 2 is illustrated. It is this portion which engages the seat 14 of a docking station cradle 13. It comprises the following interfacing components in order from left to right as viewed in Fig. 4:-
a parallel port 16,
a VGA port 17,
a network port 18,
a serial port 19,
a pointing device port 20,
a modem port 21,
an audio socket 22.
a microphone jack 23,
an infra red interface 24,
a DC power input terminal 25, and
power terminals 26 for connection to the docking station charging terminals.

Referring again to Fig. 1, the screen 3 comprises an LCD display 40 and a pair of speakers 41. A snap-fitting fastener 42 allows the screen 3 to be secured in place when closed. The screen 3 pivots on the base 2 about a hinge 43. The computer 1 also comprises a floppy disk drive 44 and a PCMCIA card slot 45 in the side opposite the handle 9.

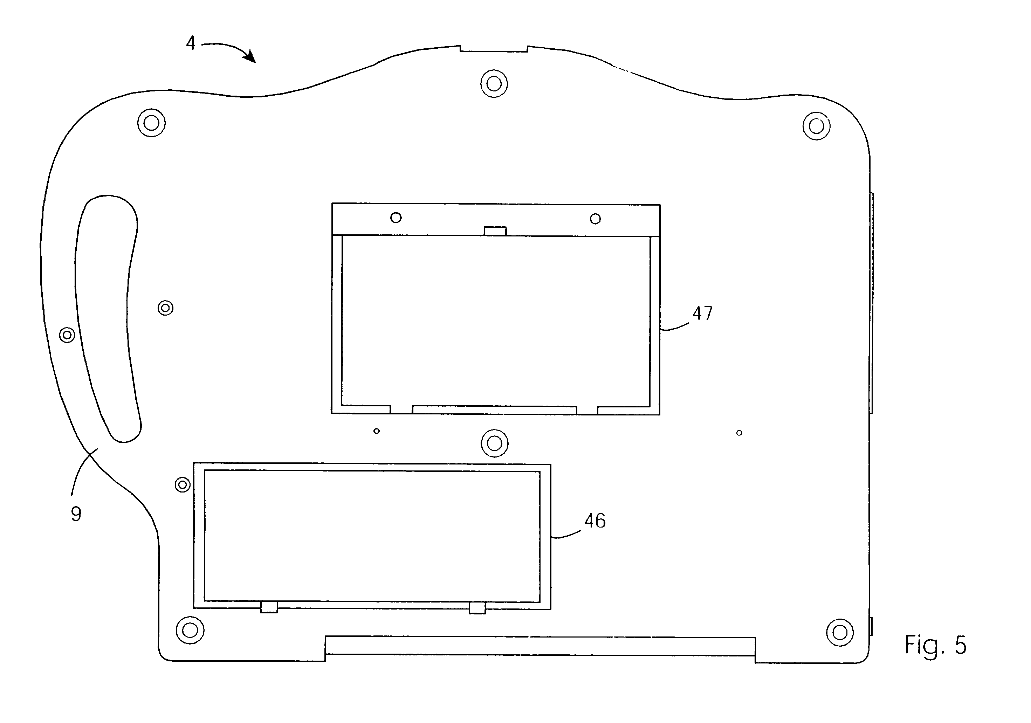

Referring to Fig. 5, the computer 1 also comprises a battery compartment 46 in the bottom moulding 4, which also comprises an opening 47 for receiving an operating system module 48.

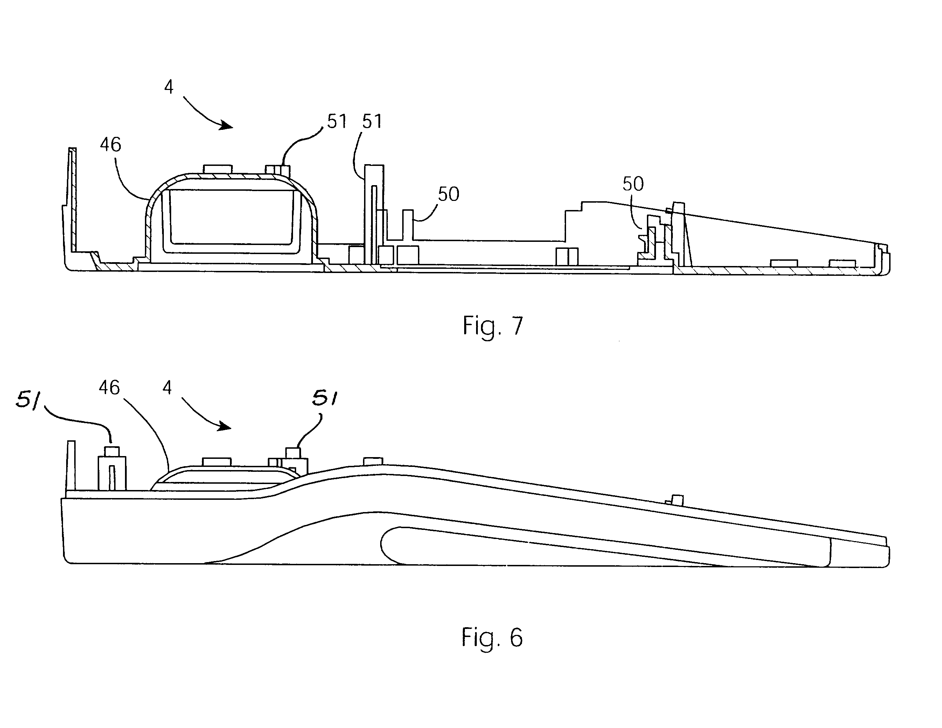

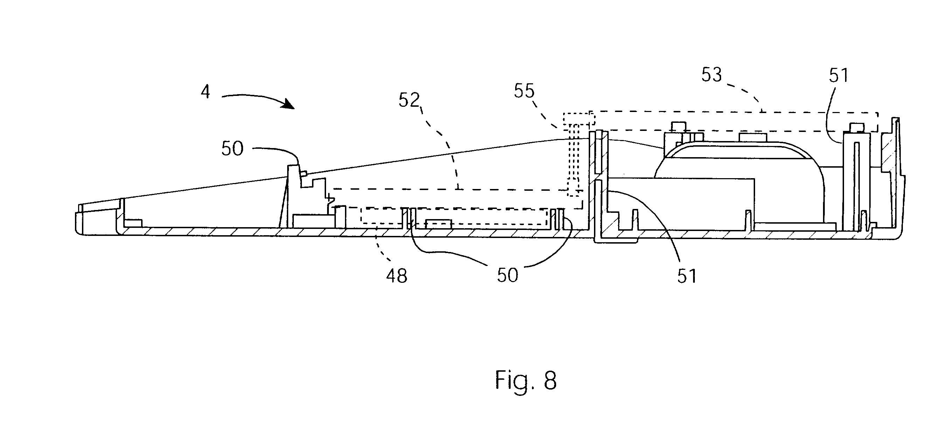

Referring particularly to Figs. 6, 7, and 8 the bottom moulding 4 comprises front pillars 50 and rear pillars 51 which support a mother board 52 and a connector board 53 respectively. These boards are interconnected by connectors 55 for a system bus. It has been found that by providing control circuits on a single board and the communication functions on a separate board the internal mechanical arrangement is very simple and compact. Also, the circuits are located very close to their interfacing terminals. For example, the connector board 53 is located very close to the series of ports 16 to 26. Also, the mother board 52 is located very close to the keyboard 6 and the track pad 8, and its location provides for connection of the removable operating system module 48 underneath the computer via the opening 47. It will also be appreciated that the pillars 50 and 51 provide structural strength to resist compression between the top moulding 5 and the bottom moulding 4. This is important for robustness.

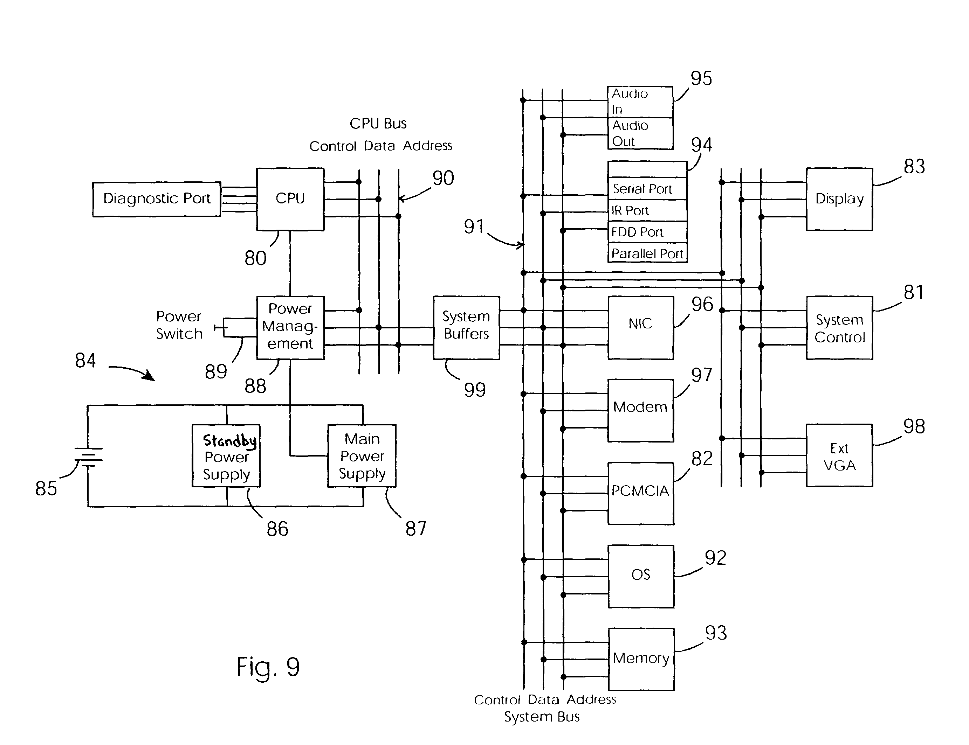

Referring now to Fig. 9, the overall architecture is illustrated. The CPU is indicated by the numeral 80 and other circuits illustrated in Fig. 9 which are on the mother board 52 include system control logic 81, a PCMCIA circuit 82, a display driver 83, and a power supply 84. The power supply 84 comprises a battery supply 85 providing power to a backup power supply 86 and to a main power supply 87. The mother board also includes power management logic 88 connected to a user power switch 89 for the computer. The CPU 80 and the power management circuit 88 are connected to a CPU bus 90 having control, data, and address lines. The bus 90 is connected by system buffers 99 to a system bus 91 to which is connected the system control logic 81, the PCMCIA circuit 82 and the display driver 83.

The operating system module 48 includes 64 MB of Flash ROM 92 containing the operating system. It also comprises 16 MB of DRAM 93, both of which are connected to the system bus 91.

Finally, the connector board includes various circuits connected to the system bus 91, including serial and parallel port interfaces 94, audio interfaces 95, a NIC interface 96, a modem interface 97, and a VGA interface 98.

In more detail, the CPU 80 is an Hitachi SH37709 RISC CPU having a maximum clock speed of 80 MHz and a processor speed of 80 MIPs. The processor has six areas as follows.
- Windows CE^{TM} OS plus applications which can be supported in the 64MB ROM space of the operating system module.
- Windows CE^{TM} and educational applications. The maximum address space supportable in this space is 64 MB.
- An area designated for EDO DRAM support with 16MB, 32MB, and 64MB options available.
- Peripherals support including 10BaseT, PCMCIA and graphics display.
- System control logic, modem, parallel port, serial port, IrDA port, FDD port and internal/external PS2 ports.
- PCMCIA 2.1 compatible controller supporting I/O and memory cards.

Regarding the connector board, the parallel port connector is of the 25 pin D-type, the serial port is of the 9 pin D-type, and the infra red interface 24 is of the IRDA 1.1 compatible transceiver type with associated control logic.

The LCD display 40 is an STN LCD display 640 x 480, 256 colour with CCFL back light. The track pad 8 includes integral left and right button clicks. The PCMCIA slot 45 is of a type having a dual ejector mechanism. The network interface supports IEEE802.3 10BaseT with an RJ45 connector. The network protocol supported is Microsoft NDIS Miniports 4.0^{TM}. The modem interface 97 supports V34 + data at maximum rate of 33.6 Kbps. The parallel port is located on the connector board in conjunction with the DB25 interface connector. The two audio connectors 95, provide a connection for an external mono microphone input, while the other supports a connection to an external stereo amplifier or a set of headphones. The computer provides an eight bit mono record and stereo playback with a capability to play sound files. Playback is in stereo via built in speakers on external headphones. Volume and balance controls are supported by keyboard keys. The battery power pack 85 is a NiMH 3.8 AHr battery pack which supplies up to ten hours of typical use via the main power supply 87.

Referring again to Fig. 9, important aspects of power management in the computer 1 are illustrated. An important requirement for use of the computer in an educational environment is that it provide a large degree of application functionality but not so much that the full boot-up requirements of a desk-top PC are required. It is important that, if possible, an immediate boot-up is provided. This has been achieved in the computer 1 because the operating system is loaded in the Flash ROM 92 physically mounted on the operating system module 48. As stated above, this module also includes the DRAM 93. Immediate boot-up has been achieved by operation of the power management logic 88. This is connected to the power switch 89 and when it detects switching off of the computer by the user, it signals this event to the CPU 80. The CPU 80 in turn closes down the various circuits connected to the CPU bus 90 and the system bus 91. The CPU 80 then enters a standby mode which is detected by the power management logic 88. This detection triggers the power management logic 88 to set a disable pin on the main power supply 87 to cause this power supply to switch off so that power is supplied from the standby power supply 86 to the power management logic 88, the CPU 80, and the DRAM 93. It must be remembered that the DRAM 93 includes all of the data which was being stored in memory when the computer was switched off, together with the application programs.

Thus, when the user switches the computer 1 back on again at the switch 89, there is an almost immediate boot-up because the power had been maintained to the power management logic 88, the CPU 80 and the DRAM 93 by the backup power supply 86.

In addition, the CPU 80 includes an analog to digital circuit which monitors output from the main power supply 87. If this is in the range of 7.0V to 12.0V then the CPU 80 allows immediate, boot-up. However, if it is in the range of 6.7 to 7.0V, then the CPU 80 directs display of an error message to prompt a user to re-charge the battery. If the voltage level is below 6.7 V, then the CPU 80 prevents boot-up, thereby protecting both the circuits and the main power supply 87.

In more detail, a power supply enable signal is latched if the battery voltage exceeds the power-up threshold. After the enable signal is latched, the power level is monitored during a 400 msec timer period. If the voltage drops below the "running threshold", the latch is cleared and the power-up process is aborted. If, on the other hand, the 400 msecs elapses without the latter level dipping below this threshold, a CPU "wakeup" interupt signal is raised. On receipt of this signal the CPU commences its restart procedure and brings the system up.

It will be appreciated that the invention provides a computer which is of compact, slim and robust configuration. The handle allows the computer to be easily carried and also to be inserted in a docking station. The configuration at the rear of the base 2 allows for stable and compact storage of the computer in the docking station cradles 13. Also, the series of ports 16 to 26 at the rear of the base 2 are of a strong and robust type. The configuration of the bottom holding 4 with the various pillars 50 and 51 provide for structural strength within the base 2 to protect the circuits. The fact that the circuits are mounted on only three circuit boards 52, 53 and 48 provides for durability and resistance to mechanical shock.

It will also be appreciated that by providing the operating system and memory in a removable operating system module, the system may be very easily upgraded. This is very important for educational environments, in which budgets are often very tight and complete replacement of a large number of computers is not feasible. The removable module allows a large degree of application functionality, while at the same time allowing immediate boot-up and simple replacement for upgrades.

Another important feature of the computer 1 is the power management functionality which provides excellent protection to the circuits and the re-chargeable power pack in the compartment 46 while also providing immediate boot-up. These requirements are very important for educational environments.

The invention is not limited to the embodiments described but may be varied in construction and detail within the scope of the claims.

## Claims

1. A portable computer (1) for students, the computer comprising:-
a base (2) housing data processing circuits including a CPU and memory and a screen (3) hinged to the base in a clamshell configuration; and
a re-chargeable power supply means, characterised in that,
the power supply means comprises terminals (26) mounted to engage charging terminals in a docking station;
the base comprises a carrying handle (9) in a side of the computer; and
the data processing circuits comprise power management means (80, 88) for maintaining power supply to the CPU (80) and the memory (93) in a standby mode when the computer has been switched off by a user.

2. A portable computer as claimed in claim 1, wherein a rear portion of the base (2) is configured for standing upright in a docking station and the recharging terminals (26) are mounted in the rear portion.

3. A portable computer as claimed in claim 2, wherein the rear portion supports communication and interfacing ports (16-26).

4. A portable computer as claimed in any preceding claim, wherein the power supply means comprises a standby power supply (86) and a full power supply (87), and the power management means comprises means (88) for selecting between full and standby power outputs.

5. A portable computer as claimed in claim 4, wherein the power management means (88) comprises:-
means for detecting when a user switches the computer on and off,
means for detecting power supply output level;
means in the CPU (80) for shutting down circuits when switched on,
means for selecting standby mode power (86) when the circuits are shut down, and
means for selecting full power (87) if switching on is detected and the power supply output exceeds a pre-set threshold.

6. A portable computer as claimed in claim 5, wherein the selection means comprises means for generating a display message for a user if the power supply voltage level is in an interim range above the pre-set threshold.

7. A portable computer as claimed in claims 5 or 6, wherein the power management means comprises a logic circuit (88) connected to the CPU (80) and to the power supply (84).

8. A portable computer as claimed in any preceding claim, wherein the memory (93) is mounted on a removable circuit (48).

9. A portable computer as claimed in claim 8, wherein the base comprises an opening (47) in a bottom wall for receiving the removable circuit (48).

10. A portable computer as claimed in claims 9 or 10, wherein the removable circuit also includes read only memory (92) storing the operating system.

11. A portable computer as claimed in claim 10, wherein the read only memory (92) is Flash ROM.

12. A portable computer as claimed in claim 11. wherein the handle (9) is integrally moulded in the base of the computer

13. A portable computer as claimed in any preceding claim, wherein the base comprises a keyboard (6) and a hand rest (7) extending forwardly and downwardly from the keyboard.

14. A portable computer as claimed in claim 13, wherein the keyboard and the hand rest are in a recess in the base for receiving the screen (3) when in the closed position.

15. A portable computer as claimed in claims 12 or 13, wherein the hand rest incorporates a track pad (8) for cursor movement

16. A portable computer as claimed in any preceding claim, wherein the data processing circuits comprise a mother circuit board (52) housed within the base underneath the keyboard, and a connection circuit board (53) housed within the base adjacent to the rear portion, the mother board and the connector board being interconnected by system bus connectors (55).

17. A portable computer as claimed in claim 16, wherein the mother circuit board (52) comprises means for connection directly to the removable circuit (48).

18. A portable computer as claimed in claims 16 or 17, wherein the mother circuit board (52) and the connector circuit board (53) are mounted on pillars (50, 51) in a bottom moulding (4), the pillars providing structural connection between the bottom moulding and a top mouldings (5).
